# EUROPÄISCHE PATENTANMELDUNG

(11) **EP 0 527 287 A1**
(43) Veröffentlichungstag der Anmeldung: **17.02.1993**
(21) Anmeldenummer: 92102796.7
(22) Anmeldetag: 20.02.1992
(51) Int. Cl.: F16J 15/08

(54) **Flachdichtung**

(30) Priorität: 13.08.1991 DE 4126660
(71) Anmelder: GOETZE AG, D-51399 Burscheid (DE)
(72) Erfinder: Bohl, Alfons, W-5243 Herdorf/Sieg (DE)

(57) **Zusammenfassung**

Bei einer Flachdichtung aus einem Laminat mit mindestens drei übereinanderliegenden Platten (2,3,4) sind die Befestigungseinrichtungen zur formschlüssige Verbindung der aufeinanderliegenden Bleche untereinander aus Durchgangsöffnungen (5a,5c) gebildet, bei denen die beiden Deckbleche am Öffnungsrand radial nach innen vorstehende Vorsprunge (7a,7c) und radial nach außen weisende Ausnehmungen aufweisen, so daß beim Umbiegen der Vorsprünge (7a,7c) über den Öffnungsrand die Schenkel der Vorsprünge (7a,7c) in die Ausnehmungen hineinragend umbogen sind und auf den Kernplatten (3) aufliegen.

## Beschreibung

Die Erfindung betrifft eine Flachdichtung, wie insbesondere eine Zylinderkopfdichtung für Verbrennungskraftmaschinen, bestehend aus einem Laminat aus mindestens drei übereinadnerliegenden Platten mit beidseitigen Deckblechen aus Metall und mindestens einer Kernplatte und mindestens einer die Platten untereinander formschlüssig verbindenden Befestigungseinrichtung.

Es ist bekannt, Flachdichtungen, wie vor allem Zylinderkopfdichtungen für Verbrennungskraftmaschinen, aus einem Laminat mehrerer übereinanderliegender Metallblechplatten herzustellen. Je nach Anwendungsfall können die Metallbleche beschichtet und/oder unterschiedlich dick sein, die Bleche können aus unterschiedlichen Metallen mit unterschiedlichen Verformungseigenschaften bestehen, oder die Metallbleche können zur Verbesserung der Abdichtwirkung vor allem an den Durchgangsöffnungen gesickt oder umfalzt sein.

Vor allem für die Handhabung der einbaufertigen Dichtung bis zur Montage ist eine sichere Verbindung der aufeinanderliegenden Metallbleche erforderlich. Bevorzugt wird dazu eins der Deckbleche am Dichtungsrand oder an einem der Öffnungsränder über die darüberliegenden Metallblechplatten gebogen, oder es wurden als zusätzliche Bauteile Nieten oder Einfassungsringe verwendet, die in gegebenenfalls zusätzlichen Öffnungen der Dichtungsplatten montiert sind. Auf diese Art wird eine handhabungssichere kraftschlüssige Verbindung der Metallbleche erreicht.

Nachteilig sind in diesen Fällen jedoch die Verwendung zusätzlicher Bauteile, die in gesonderten Verfahrensschritten hergestellt und gegebenenfalls mit zusätzlichen konstruktiven Maßnahmen montiert werden müssen. Vor allem aber liegen die Schenkel der umbogenen Deckbleche, der Einfassungsringe oder der Nieten ein- oder beidseitig auf den Deckblechen auf und erhöhen in diesen Bereichen die Dicke der Dichtung. Die dadurch im eingebauten Zustand zwischen Zylinderkopf und Motorblock entstehende partielle höhere Dichtpressung ist in bestimmten Anwendungsfällen unerwünscht.

Der vorliegenden Erfindung liegt daher die Aufgabe zugrunde, eine Flachdichtung gemäß Oberbegriff des Hauptpatentanspruchs zu schaffen, deren aufeinanderliegende Metallbleche mit einfachen und wirtschaftlichen Maßnahmen ohne die beschriebenen Nachteile handhabungssicher aneinander formschlüssig befestigt sind.

Erfindungsgemäß wird diese Aufgabe durch eine laminierte Flachdichtung aus mindestens drei aufeinanderliegenden Platten gelöst, deren metallische Deckbleche am Rand mindestens einer durch alle aufeinanderliegenden Metallbleche führende Durchgangsöffnung, radial nach innen vom Rand ausgehende Vorsprünge und radial vom Rand nach außen weisende Ausnehmungen aufweisen, welche so angeordnet und bemessen sind, daß die radial nach innen weisenden Vorsprünge der oberen und unteren Deckbleche beim Umbiegen der Vorsprünge über die Kernplatten mit ihren Schenkeln in den Ausnehmungen der unteren beziehungsweise oberen Deckbleche liegen und auf den Kernplatten aufliegen.

Durch die Erfindung ist es jetzt möglich, mit einer relativ einfachen und dadurch wirtschaftlichen Maßnahme alle im Laminat aufeinanderliegenden Platten handhabungssicher miteinander zu befestigen. Das Stanzen der Durchgangsöffnungen in die beiden Deckbleche mit ihren Vorsprüngen und Ausnehmungen ist ohne Mehraufwand möglich, und die Vorsprünge der beiden Deckbleche können in einem einzigen Arbeitsschritt zur Befestigung über die Kernplatten gebogen werden. Dadurch, daß entsprechend der Anordnung der Ausnehmungen die Vorsprünge der gegenüberliegenden Deckbleche in die entsprechenden Ausnehmungen hineingebogen werden, wird die Dichtungsplatte in diesen Bereichen nicht verdickt und die Dichtpressung wird in diesen Bereichen nicht erhöht. Dadurch, daß die Vorsprünge sowohl vom unteren als auch vom oberen Deckblech ausgehend über den Öffnungsrand auf den Kernplatten mit ihren Schenkeln aufliegend umbogen werden, sind alle aufeinanderliegenden Bleche formschlüssig und handhabungssicher miteinander verbunden.

Im allgemeinen genügt es, wenn die Ausnehmungen und Schenkel sektorweise über den Öffnungsrand der Deckbleche verteilt sind, so daß bevorzugt am Öffnungsrand jedes Deckbleches je ein halbkreisförmiger Vorsprung und je eine halbkreisförmige Ausnehmung gebildet ist. Im Sinne der Erfindung können sowohl die funktionsmäßig ohnehin vorhandenen Durchgangsöffnungen der Flachdichtung als auch zusätzliche Öffnungen der Dichtung mit den erfindungsgemäßen Vorsprüngen und Ausnehmungen der Deckbleche ausgerüstet sein. Je nach Größe der Dichtung genügen im allgemeinen 2 oder mehr erfindungsgemäß ausgestattete Durchgangsöffnungen.

Die erfindungsgemäßen Flachdichtungen sollen bevorzugt als Zylinderkopfdichtungen für Verbrennungskraftmaschinen eingesetzt werden, im Prinzip können sie jedoch auch als Auspufflanschdichtungen oder für andere Anwendungsfälle verwendet werden. Anstelle aus Metall können die Kernplatten, falls erforderlich, auch aus Weichstoffmaterial, wie bevorzugt einem sonst für Zylinderkopfdichtungen üblichen Faservliesmateral, bestehen.

Die Erfindung wird durch die 6 Abbildungen näher erläutert:
Figuren 1a und 1b zeigen Querschnittsbilder einer Zylinderkopfdichtung an einer erfindungsgemäßen Befestigungsöffnung vor und nach dem Falzen und
Figur 1c das Aufsichtsbild von Figur 1b
Figuren 2a bis 2 c sind Aufsichtbilder (Stanzbilder) der Befestigungsöffnungen der übereinanderliegenden Metallbleche der Dichtung aus Figuren 1a - 1c.

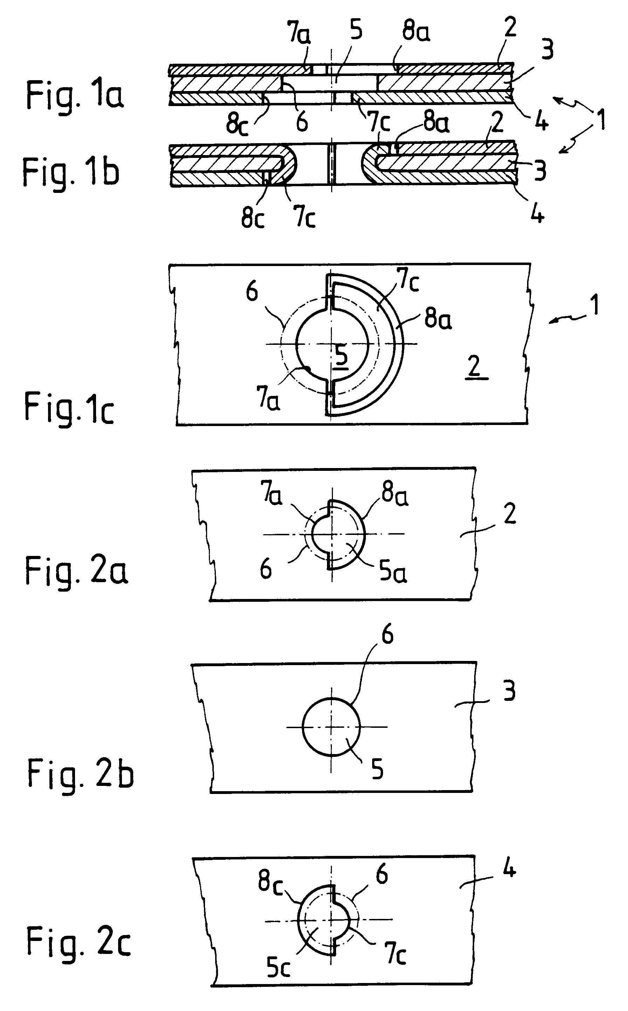

In Figur 1 ist (1) die Zylinderkopfdichtung, bestehend - gemäß den Querschnittbildern 1a und 1b - aus den drei übereinanderliegenden Blechplatten (2, 3, 4), nämlich dem oberen Deckblech (2), dem mittleren Kernblech (3) und dem unteren Deckblech (4) mit der gemeinsamen Befestigungsöffnung (5). Die Befestigungsöffnung (5) des mittleren Kernblechs (3) besitzt gemäß Aufsichtsbild der Figur 2b eine kreisrunde Kontur (6). Die Befestigungsöffnungen (5a und 5c) des oberen Deckblechs (2) und des unteren Deckblechs (4) (vgl. Aufsichtsbilder 2a und 2b) besitzen eine von der gestrichelt eingezeichneten Kreisform (6) abweichende Kontur, wobei spiegelbildlich halbkreisförmige Vorsprünge (7a, 7c) und halbkreisförmige Aussparungen (8a, 8c) am Öffnungsrand (6) gebildet sind. Beim Aufeinanderlegen der unteren Deckplatte (4) des Kernblechs (3) und des Deckblechs (2) liegen gemäß Querschnittsbild der Figur 1a mit der kreisrunden Kontur (6) ihrer Öffnungen (5) aufeinander, wobei der Vorsprung (7a) des oberen Deckblechs (2) von der einen Seite her in die Öffnung (5) und der Vorsprung (7a) des unteren Deckblechs (4) von der anderen Seite in die Öffnung (5) hineinragt. Entsprechend spiegelbildlich umgekehrt bilden die Deckbleche (2, 4) die Aussparungen (8a, 8c). Zur Befestigung, gemäß Querschnittsbild der Figur 1b, wird der Vorsprung (7a) des oberen Deckblechs (2) über den Öffnungsrand (5) so gebogen, daß sein Ende in der Aussparung (8c) der unteren Deckplatte (4) liegt und der Vorsprung (7c) der unteren Deckblechs (4) wird so umgebogen, daß sein Ende in der Aussparung (8a) des oberen Deckblechs (2) liegt. Alle Platten (2, 3, 4) sind auf diese Weise untereinander formschlüssig verbunden. Das Aufsichtsbild der Figur 1c zeigt den Blick auf die obere Deckplatte (2) der fertig zusammengebauten Dichtung (1). Die Befestigungsöffnung (5) ist etwas kleiner als die kreisrunde Kontur (6) des mittleren Kernblechs (3). Der halbkreisförmige Vorsprung (7c) des unteren Deckblechs (4) ist über den Öffnungsrand (6) gebogen und liegt in der Aussparung (8a) des oberen Deckblechs (2) ein.

## Patentansprüche

1. Flachdichtung, insbesondere Zylinderkopfdichtung für Verbrennungskraftmaschinen, bestehend aus einem Laminat aus mindestens drei übereinanderliegenden Platten mit beidseitigen Deckblechen aus Metall und mindestens einer Kernplatte und mindestens einer die Platten untereinander formschlüssig verbindenden Befestigungseinrichtung, dadurch gekennzeichnet, daß zur Bildung einer Befestigungsöffnung (5) die beiden Deckbleche (2, 4) am Rand (6) mindestens eine durch alle aufeinanderliegenden Platten (2, 3, 4) führende Durchgangsöffnung (5) radial nach innen vom Öffnungsrand (6) ausgehende Vorsprünge (7a, 7c) und radial nach außen gehende Ausnehmungen (8a, 8c) aufweisen, welche so angeordnet sind, daß die radial nach innen weisenden Vorsprünge (7a, 7c) der oberen und unteren Deckbleche (2, 4) beim Umbiegen über die Kernplatte (3) mit ihren Schenkeln in den Ausnehmungen (8a, 8c) der oberen beziehungsweise unteren Deckbleche (2, 4) gebogen sind und auf der Kernplatte (3) aufliegen.

2. Flachdichtung nach Anspruch 1, dadurch gekennzeichnet, daß zwei oder mehr Befestigungsöffnungen (5) vorgesehen sind.

3. Flachdichtung nach den Ansprüchen 1 und 2, dadurch gekennzeichnet, daß die Befestigungsöffnungen (5) aus zusätzlich in die Dichtungsplatten (2, 3, 4) ausgestanzten Öffnungen bestehen.

4. Flachdichtung nach den Ansprüchen 1 bis 3, dadurch gekennzeichnet, daß die Vorsprünge (7a, 7c) ein halbkreisförmiges Segment bilden und die Ausnehmungen (8a, 8C) eine halbkreisförmige Kontur besitzen.

5. Flachdichtung nach den Ansprüchen 1 bis 4, dadurch gekennzeichnet, daß die Dicke der Dichtungsplatten (2, 4) etwa gleich ist.
